# EUROPÄISCHE PATENTSCHRIFT

(11) **EP 3 191 651 B1**
(45) Veröffentlichungstag und Bekanntmachung des Hinweises auf die Patenterteilung: **03.10.2018**
(21) Anmeldenummer: 15763197.9
(22) Anmeldetag: 03.09.2015
(51) Int. Cl.: E03C 1/086, F16L 37/252

(54) **SANITÄRE AUSLAUFARMATUR**
SANITARY OUTLET FITTING
ROBINETTERIE D'ÉVACUATION SANITAIRE

(30) Priorität: 09.09.2014 DE 202014007344 U
(43) Veröffentlichungstag der Anmeldung: 19.07.2017
(73) Patentinhaber: Neoperl GmbH, 79379 Müllheim (DE)
(72) Erfinder: TEMPEL, Marc, 79111 Freiburg (DE)
(74) Vertreter: Börjes-Pestalozza, Henrich
(86) Internationale Anmeldenummer: PCT/EP2015/001779
(87) Internationale Veröffentlichungsnummer: WO 2016/037692

(56) Entgegenhaltungen:
- EP-A1- 0 384 516
- DE-A1-102006 025 301
- DE-U1-202010 016 867
- GB-A- 2 155 985

## Beschreibung

Die Erfindung betrifft eine sanitäre Auslaufeinheit mit einem Außengehäuse, das am Wasserauslauf einer sanitären Auslaufarmatur montierbar ist, und mit einer sanitären Funktionseinheit, die an ihrem Außenumfang zumindest einen Haltevorsprung hat, wobei die Funktionseinheit von der Auslaufstirnseite des Außengehäuses aus mit ihrem zumindest einen Haltevorsprung in den Gehäuseinnenraum des Außengehäuses einsetzbar ist und dort durch Druckbeaufschlagung von der Auslaufstirnseite aus in die der Auslaufstirnseite abgewandte Richtung verschiebbar ist.

Um den aus einer sanitären Auslaufarmatur austretenden Wasserstrahl zu formen und um zusätzlich oder stattdessen die Durchflussleistung einer Auslaufarmatur unabhängig vom Wasserdruck auf einen festgelegten Maximalwert begrenzen zu können, hat man bereits verschiedene sanitäre Funktionseinheiten geschaffen, die beispielsweise als Strahlregler oder als Durchflussmengenregler ausgebildet sind.

So sind als Strahlregler ausgestaltete sanitäre Funktionseinheiten aus dem Stand der Technik hinlänglich bekannt. Beispielsweise beschreibt die DE 4238845 A1 einen Strahlregler, der von einer Gewindehülse gehalten ist, die an das Auslaufende einer sanitären Auslaufarmatur angeschraubt wird.

Gerade im Sanitärbereich ist es ein bekanntes Problem, dass je nach Rohrleitungssystem oder nach der chemischen Zusammensetzung des Wassers es zu einer vermehrten Absetzung von ausfallenden Feststoffen, beispielsweise von Kalk oder anderen Verunreinigungen, kommen kann. Diese Verunreinigungen können die Funktionsweise sanitärer Funktionseinheiten, beispielsweise von Strahlreglern, erheblich beeinträchtigen. Zusätzlich sind hygienische Gesichtspunkte, beispielsweise bei der Verwendung von sanitären Einsetzeinheiten in Krankenhäusern zu berücksichtigen. Die vorbekannten Funktionseinheiten müssen deshalb erforderlichenfalls aus dem Wasserauslauf einer sanitären Auslaufarmatur demontiert werden können, um diese Funktionseinheiten auszutauschen oder zu reinigen.

Das Problem der Beeinträchtigung einer sanitären Funktionseinheit durch Verunreinigungen wird in der DE 4238845 A1 dadurch gelöst, dass die sanitäre Funktionseinheit mittels eines Elastomers, das sich zwischen einer Gewindehülse und dem Strahlregler befindet, gehalten wird. Sobald sich der Wasserdruck in Folge zunehmender Verunreinigungen und damit einhergehend einer zunehmenden Verstopfung der dort beschriebenen Siebe erhöht, löst sich der Strahlregler aus der Gewindehülse und kann zu Reinigungs- oder Austauschzwecken entfernt werden. Von Nachteil ist dabei, dass die sanitäre Funktionseinheit erst bei einem gewissen Druck, nämlich durch den vorhandenen Wasserdruck, freigegeben wird, was bereits eine übermäßige Verunreinigung voraussetzt. Eine präventive Entfernung dieser sanitären Funktionseinheit, etwa aus hygienischen Gründen, wird hiermit jedoch nicht ermöglicht. Weiterhin ist von Nachteil, dass sowohl die sanitäre Funktionseinheit als auch die zur Befestigung eingesetzte Gewindehülse entsprechend bearbeitet werden müssen, wobei hier insbesondere für die Gewindehülse, die üblicherweise aus einem metallischen Werkstoff besteht, ein nicht unerheblicher und somit kostenintensiver Bearbeitungsschritt erforderlich wird. Die Verwendung eines Elastomers als Haltemöglichkeit beinhaltet weiterhin den Nachteil, dass die Tragfähigkeit des Elastomers aufgrund gewisser Alterungsprozesse nachlässt, so dass die sanitäre Funktionseinheit unbeabsichtigt aus dem Wasserauslauf der Auslaufarmatur herausfallen kann.

Aus der DE 10 2006 025 301 A1 ist bereits eine sanitäre Auslaufeinheit der eingangs erwähnten Art vorbekannt, die als Strahlregler ausgestaltet ist und ein Außengehäuse hat, das am Wasserauslauf einer sanitären Auslaufarmatur montierbar ist. Die als Strahlregler ausgebildete vorbekannte Auslaufeinheit weist eine Strahlzerlegereinrichtung sowie ein oder mehrere Einbauteile auf. Die Einbauteile sind in einem Einsetzteil vorgesehen, das über einen Schnelltrennverschluss mit einem an der Auslaufarmatur montierbaren Adapterteil lösbar verbunden ist. Der zwischen Adapterteil und Einsatzteil vorgesehene Stelltrennverschluss erlaubt es, das Einsatzteil werkzeuglos mittels einer axialen Einsetzbewegung am Adapterteil zu befestigen und ebenso mittels einer axialen Auslösebewegung auch wieder davon zu trennen. Das Einsatzteil weist dazu an seinem Außenumfang einen Haltevorsprung auf, wobei das auch als Funktionseinheit dienende Einsatzteil von der Auslaufstirnseite des Außengehäuses aus mit seinem Haltevorsprung in den Gehäuseinnenraum des Außengehäuses einsetzbar ist und dort durch Druckbeaufschlagung von der Auslaufstirnseite aus in die der Auslaufstirnseite abgewandte Richtung verschiebbar ist. Das Adapterteil, das Einsatzteil und der diese Bestandteile lösbar miteinander verbindbare Schnelltrennverschluss haben jedoch eine erhebliche Baulänge der vorbekannten Auslaufeinheit zur Folge. Die Herstellung der aus DE 10 2006 025 301 A1 vorbekannten Konstruktion ist mit einem hohen Aufwand verbunden. Zudem wird selbst bei einer Entriegelung die sanitäre Funktionseinheit nicht vollständig freigegeben, sondern muss vielmehr zusätzlich aus dem Wasserauslauf der Auslaufarmatur entnommen werden, wozu meist der Wasserdruck des zur Funktionseinheit zuströmenden Wassers notwendig ist.

Aus der DE 20 2010 016 867 U1 kennt man bereits eine sanitäre Auslaufeinheit, die am Wasserauslauf einer sanitären Auslaufarmatur montierbar ist. Die vorbekannte Auslaufeinheit weist einen Durchflussmengenregler oder Durchflussbegrenzer auf, der ein Stellelement hat, das im Zusammenwirken mit einem Gegenelement den Durchflussquerschnitt einregelt oder begrenzt. Um den die Durchflussleistung bestimmenden Durchflussquerschnitt durch eine axiale Veränderung der Relativposition von Stellelement und Gegenelement vorwählen oder variieren zu können, ist an der Auslaufstirnseite des Auslaufeinsatzes eine Handhabe vorgesehen. Dabei wird eine Stellbewegung an der Handhabe in eine axiale Relativbewegung von Stellelement und Gegenelement umgesetzt. Um die Durchflussleistung des vorbekannten Auslaufeinsatzes rasch und bequem verändern oder anpassen zu können, ist diese Handhabe als Drucktaste ausgestaltet. Dabei lässt sich eine Stellbewegung an der Handhabe mittels einer Betätigungs- oder Drucktastmechanik in eine axiale Relativbewegung von Stellelement und Gegenelement umsetzen. Mit Hilfe dieser Betätigungs- oder Drucktastmechanik lässt sich die Durchflussleistung des vorbekannten Auslaufeinsatzes durch bloße Druckbeaufschlagung auf die als Drucktaste ausgebildete Handhabe von einer Stufe mit einer definierten Durchflussleistung in zumindest eine Stufte mit einer demgegenüber anderen Durchflussleistung umschalten. Eine Demontage einzelner Bestandteile der vorbekannten Auslaufeinheit durch Betätigen der Drucktast- oder Betätigungsmechanik ist bei der vorbekannten Auslaufeinheit demgegenüber nicht vorgesehen.

Aus der EP 0 384 516 A1 kennt man bereits eine Schlauchkupplung, die zum Verbinden benachbarter Schlauch- oder Leitungsabschnitte vorgesehen ist. Die vorbekannte Schlauchkupplung weist dazu zwei komplementäre Kupplungsteile auf, die bajonettartig miteinander lösbar verbunden werden können.

Aus der GB 2 155 985 A kennt man bereits einen Bajonettverschluss, der beispielsweise dazu verwendet werden kann, um eine Flasche an ihrem Flaschenhals mit einem Flaschenverschluss zu verbinden.

Es besteht die Aufgabe, eine sanitäre Auslaufeinheit der eingangs erwähnten Art zu schaffen, bei der sich die sanitäre Funktionseinheit beispielsweise zum Austausch oder zu Reinigungszwecken einfach und schnell aus dem Wasserauslauf einer sanitären Auslaufarmatur einsetzen oder entnehmen lässt.

Die erfindungsgemäße Lösung dieser Aufgabe besteht bei der sanitären Auslaufeinheit der eingangs erwähnten Art darin, dass die Funktionseinheit mehrere Haltevorsprünge hat, welche in einer Gebrauchsstellung der Auslaufeinheit in einer Ausnehmung jeweils eines Gegenvorsprunges am Innenumfang des Außengehäuses aufliegen, und dass die Funktionseinheit von der Auslaufstirnseite des Außengehäuses aus mit ihren Haltevorsprüngen durch, die Gegenvorsprünge trennende Kanäle hindurch in den Gehäuseinnenraum des Außengehäuses einsetzbar ist und dort durch Druckbeaufschlagung von der Auslaufstirnseite aus derart in die der Auslaufstirnseite abgewandte Richtung verschiebbar ist, dass die Haltevorsprünge aus ihren Ausnehmungen heraus gegen eine Führungsprofilierung oder Führungskulisse gedrückt werden, die die axiale Vorschubbewegung der Funktionseinheit und ihre außenumfangsseitig vorstehenden Haltevorsprünge in eine Drehbewegung der Funktionseinheit in Umfangsrichtung umsetzt, welche die Haltevorsprünge in eine, im Wesentlichen zu jeweils einem Kanal koaxiale Drehposition bewegt.

Die erfindungsgemäße sanitäre Auslaufeinheit weist ein Außengehäuse auf, mit dem die Auslaufeinheit am rohrförmigen Wasserauslauf einer sanitären Auslaufarmatur montierbar ist. Der Auslaufeinheit ist eine sanitäre Funktionseinheit zugeordnet, die an ihrem Außenumfang Haltevorsprünge hat. Diese Haltevorsprünge liegen in einer Gebrauchsstellung in einer Ausnehmung jeweils eines Gegenvorsprunges auf, wobei die Gegenvorsprünge am Innenumfang des Außengehäuses angeformt sind. Die Gegenvorsprünge werden durch Kanäle voneinander getrennt, durch die hindurch die Haltevorsprünge beim Einsetzen der Funktionseinheit in das Außengehäuse vorgeschoben werden können. Durch bloßes Einschieben der Funktionseinheit in das Innere des im Wasserauslauf der Auslaufarmatur montierten Außengehäuses lässt sich die Funktionseinheit leicht und werkzeugslos im Wasserauslauf der Auslaufarmatur befestigen. Dabei können die Haltevorsprünge aus ihren Ausnehmungen heraus -gegen eine im Inneren des Außengehäuses befindliche umlaufende Führungsprofilierung oder Führungskulisse gedrückt werden. Dabei stößt die Funktionseinheit mit ihren Haltevorsprüngen beim axialen Verschieben im Inneren des Außengehäuses gegen die Führungskulisse oder Führungsprofilierung an. Diese Führungskulisse oder Führungsprofilierung ist gegenüber den Ausnehmungen derart versetzt angeordnet, dass beim weiteren Vorschieben der Funktionseinheit die an der Führungskulisse oder Führungsprofilierung anliegenden Haltevorsprünge derart zur Seite hin gedrückt werden, dass die axiale Vorschubbewegung in eine Drehbewegung der Funktionseinheit in Umfangsrichtung umgesetzt wird. Durch diese Druckbeaufschlagung der Funktionseinheit in Umfangsrichtung werden auch die an der Funktionseinheit außenumfangsseitig vorgesehenen Haltevorsprünge in eine, jeweils einem Kanal angenäherte Drehposition bewegt. Die Funktionseinheit kann anschließend mit ihren Haltevorsprüngen durch die Kanäle hindurch aus dem Außengehäuse herausgeschoben und vom Außengehäuse separiert werden, um die Funktionseinheit bei Bedarf auszutauschen oder zu reinigen. Bei der erfindungsgemäßen sanitären Auslaufeinheit kann die im Inneren des Außengehäuses vorgesehene Funktionseinheit einfach und schnell eingesetzt und wieder herausgenommen werden.

Sobald die aus der Ausnehmung herausgeschobenen Haltevorsprünge gegen die Führungsprofilierung oder Führungskulisse stoßen, wird die axiale Vorschubbewegung der Funktionseinheit in eine Drehbewegung in Umfangsrichtung umgesetzt, die die Haltevorsprünge an den benachbarten Kanal zwischen den Gegenvorsprüngen annähert. Um das Einfädeln der aus der Ausnehmung herausgeschobenen Haltevorsprünge in den in Drehrichtung benachbarten Kanal zu erleichtern, ist es zweckmäßig, wenn die Gegenvorsprünge an ihrer, sich in Drehrichtung an ihrer Ausnehmung anschließenden Stirnseite eine zum benachbarten Kanal hin zulaufende Einlaufschräge tragen.

Um beim Einsetzen der sanitären Funktionseinheit diese gut im Gehäuseinneren des Außengehäuses der sanitären Auslaufeinheit befestigen zu können, ist es vorteilhaft, wenn die Funktionseinheit von der Auslaufstirnseite des Außengehäuses aus in dessen Gehäuseinnenraum einschiebbar ist, bis die an der Funktionseinheit außenumfangsseitig vorstehenden Haltevorsprünge auf die Führungsprofilierung oder Führungskulisse treffen, die die axiale Vorschubbewegung der Funktionseinheit in eine Drehbewegung umsetzt, welche die Haltevorsprünge in eine, der benachbarten Ausnehmung angenäherte Drehposition bewegt.

Eine einfache und vorteilhafte Ausführungsform gemäß der Erfindung sieht vor, dass die Gegenvorsprünge jeweils eine taschenförmige und eine Ausnehmung bildende Eintiefung umgrenzen. Dabei können die eine Eintiefung umgrenzenden und in Vorschubrichtung orientierten Längswände der Gegenvorsprünge etwa parallel zueinander angeordnet sein oder konisch aufeinander zu verlaufen.

Der gute Halt der Funktionseinheit im Inneren des Außengehäuses wird begünstigt und das Einrücken der außenumfangsseitig an der sanitären Auslaufeinheit vorgesehenen Haltevorsprünge in die am Innenumfang des Außengehäuses vorgesehenen Ausnehmungen wird erleichtert, wenn die Gegenvorsprünge an ihrer, sich entgegen der Drehrichtung an ihrer Ausnehmung anschließenden Stirnseite eine zur Ausnehmung hin zulaufende und vorzugsweise in die Ausnehmung übergehende Einrückschräge haben.

Eine besonders einfach bedienbare und funktionssichere Ausführung gemäß der Erfindung sieht vor, dass die der Sägezahnprofilierung zugewandten Stirnseiten der Gegenvorsprünge durch eine Einlaufschräge und eine Einrückschräge gebildet sind, und dass die Einrückschräge und die Einlaufschräge eines jeden Gegenvorsprungs durch eine, in axialer Richtung der Funktionseinheit orientierte Flanke gebildet sind, welche die Ausnehmung der Gegenvorsprünge begrenzt.

Die einfache Entnahme einer im Außengehäuse der erfindungsgemäßen Auslaufeinheit befindlichen Funktionseinheit wird begünstigt, wenn die Funktionseinheit im Außengehäuse gegen eine Rückstell- oder Ausschiebekraft zumindest eines Rückstell- oder Ausschiebeelementes in die der Auslaufstirnseite des Außengehäuses abgewandte Richtung verschiebbar ist. Da die Rückstell- oder Ausschiebkraft des zumindest einen Rückstell- oder Ausschiebeelementes stets dafür Sorge trägt, dass die mit ihren Haltevorsprüngen aus den Ausnehmungen ausgerückte Funktionseinheit auch aus dem Außengehäuse der Auslaufeinheit herausgepresst wird, ist der Wasserdruck eines durch die Auslaufeinheit strömenden Wasserstrahles nicht zusätzlich erforderlich.

Eine bevorzugte Weiterbildung gemäß der Erfindung sieht vor, dass im Außengehäuse eine Innenhülse verschieblich geführt ist, dass das zumindest eine Rückstell- oder Ausschiebeelement die Innenhülse beaufschlagt und dass die Funktionseinheit auf der dem zumindest einen Rückstell- oder Ausschiebeelement abgewandten Stirnseite der Innenhülse an dieser anliegt.

Um die Trennebene zwischen der Innenhülse und der Funktionseinheit gegenüber dem Inneren des Außengehäuses gut abdichten zu können, ist es vorteilhaft, wenn zwischen der Innenhülse und der Funktionseinheit eine Ringdichtung vorgesehen ist.

Bevorzugte Ausführungsbeispiele gemäß der Erfindung sehen vor, dass das Außengehäuse mittels einer Schraub- oder Bajonettverbindung gehalten ist. Möglich ist aber auch, stattdessen ein Schweißen, Kleben oder eine Pressverbindung vorzusehen.

Dabei sieht eine besonders einfache und leicht herstellbare Ausführungsform gemäß der Erfindung vor, dass das Außengehäuse als Schraubhülse ausgebildet ist, die mit einem außenumfangsseitig vorgesehenen Außengewinde in ein Innengewinde am Wasserauslauf einer sanitären Auslaufarmatur einschraubbar ist. Ist das Außengehäuse als Schraubhülse ausgebildet, die in ein Innengewinde am Wasserauslauf der sanitären Auslaufarmatur eingeschraubt werden kann, lässt sich die erfindungsgemäße Auslaufeinheit besonders einfach und fest im Wasserauslauf einer sanitären Auslaufarmatur befestigen.

Eine besonders einfache und leicht herstellbare Ausführungsform gemäß der Erfindung sieht vor, dass das Rückstell- oder Ausschiebeelement als Druckfeder ausgebildet ist. Dabei ist es vorteilhaft, wenn die Druckfeder die Innenhülse umgreift.

Damit die am Außenumfang der Funktionseinheit radial vorstehenden Haltevorsprünge sich gut in die am Innenumfang des Außengehäuses vorgesehenen Kanäle einfädeln lassen und um die Funktionseinheit leicht in das Außengehäuse einschieben zu können, ist es vorteilhaft, wenn die Gegenvorsprünge sich in Richtung der Auslaufstirnseite der Auslaufeinheit verjüngen und wenn benachbarte Gegenvorsprünge einen, im dazwischen liegenden Kanal mündenden Einlauftrichter begrenzen.

Bevorzugte Ausführungsformen der erfindungsgemäßen Auslaufeinheit sehen vor, dass deren Funktionseinheit zumindest eines der nachfolgenden Bestandteile: Strahlregler, Durchflussmengenregler oder Vorsatzsieb, aufweist.

Möglich ist es, dass die am Außenumfang der Funktionseinheit vorstehenden Haltevorsprünge beispielsweise einen runden oder gerundeten Querschnitt haben. Um eine axiale Schiebebewegung der Funktionseinheit relativ zum Außengehäuse in eine Drehbewegung der Funktionseinheit in diesem Außengehäuse besonders leicht umsetzen zu können, ist es jedoch zweckmäßig, wenn die Haltevorsprünge einen pfeilspitzen- oder dreieckförmigen Querschnitt aufweisen, wenn die Drehbewegung der Funktionseinheit eine Drehrichtung hat, und wenn die Dreieck- oder Pfeilspitze der Haltevorsprünge in die der Drehrichtung der Funktionseinheit entgegengesetzte Richtung orientiert sind.

Eine besonders funktionssichere Ausführungsform gemäß der Erfindung sieht vor, dass die Führungsprofilierung oder Führungskulisse als Sägezahnprofilierung ausgebildet ist.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispiels noch näher beschrieben.

Es zeigt:
- Fig. 1:: eine in einem Längsschnitt gezeigte sanitäre Auslaufeinheit mit einem Außengehäuse, das am Wasserauslauf einer hier nicht gezeigten sanitären Auslaufarmatur derart montierbar ist, dass die Auslaufstirnseite aus eine Funktionseinheit lösbar einsetzbar ist, die hier einen Strahlregler mit einem zuströmseitigen Vorsatzsieb umfasst,
- Fig. 2:: die gegen eine Innenhülse in das Außengehäuse geschobene Funktionseinheit in einem DetailLängsschnitt aus Figur 1, wobei Innenhülse und Funktionseinheit in der zwischen ihnen vorgesehenen Trennebene mittels einem dazwischen angeordneten Dichtring gegenüber dem Außengehäuse abgedichtet sind,
- Fig. 3:: die hier ebenfalls längsgeschnittene Auslaufeinheit aus Figur 1 und 2 mit der vollständig in das Außengehäuse eingeschobenen und dort lösbar gehaltenen Funktionseinheit,
- Fig. 4:: das hier ohne die Funktionseinheit in einer teilgeschnittenen Längsansicht gezeigte Außengehäuse aus den Figuren 1 bis 3,
- Fig. 5:: das Außengehäuse aus den Figuren 1 bis 4 in einer teilgeschnittenen Seitenansicht,
- Fig. 6:: die Auslaufeinheit aus den Figuren 1 bis 5 mit der Funktionseinheit in einer auseinandergezogenen Perspektivdarstellung,
- Fig. 7:: die Auslaufeinheit aus den Figuren 1 bis 6 mit der Funktionseinheit in einer auseinandergezogenen Perspektivdarstellung, wobei das Außengehäuse der Auslaufeinheit hier teilgeschnitten dargestellt ist,
- Fig. 8:: die Auslaufeinheit aus den Figuren 1 bis 7 in einer längsgeschnittenen und auseinandergezogenen Perspektivdarstellung,
- Fig. 9 bis 17:: die Auslaufeinheit aus den Figuren 1 bis 8 in verschiedenen Phasen beim Einsetzen und Herausnehmen ihrer Funktionseinheit in das Außengehäuse,
- Fig. 18:: eine mit den Auslaufeinheiten gemäß den Figuren 1 bis 17 vergleichbar ausgestaltete Auslaufeinheit in einem Längsschnitt, die mit Hilfe eines an sich üblichen Auslaufmundstücks am Wasserauslauf einer sanitären Auslaufarmatur lösbar befestigt ist, und
- Fig. 19:: eine ebenfalls im Längsschnitt dargestellte Auslaufeinheit, die hier aber mit Hilfe eines überlangen Auslaufmundstücks am Wasserauslauf der sanitären Auslaufarmatur befestigt ist.

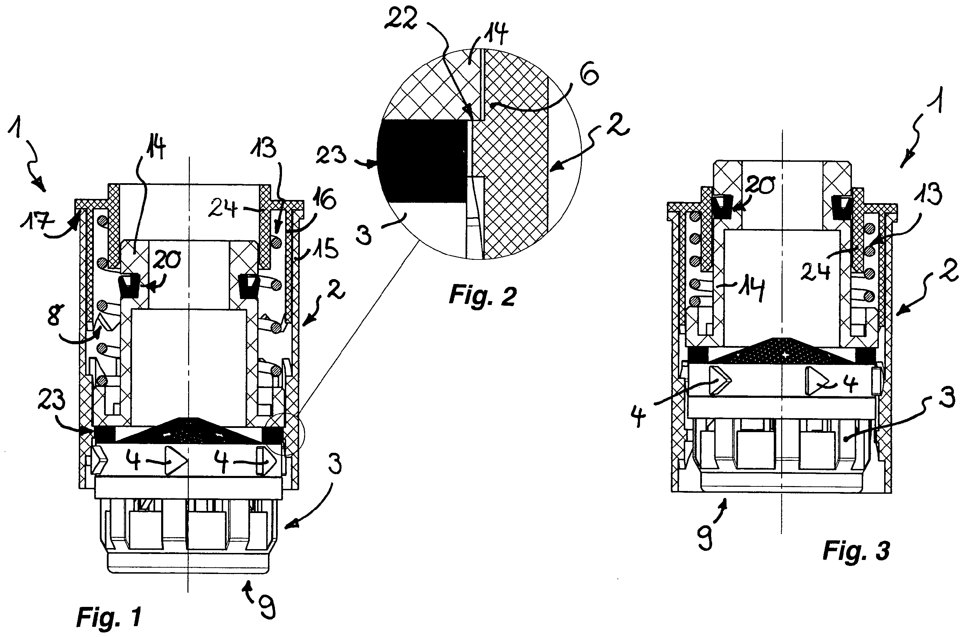

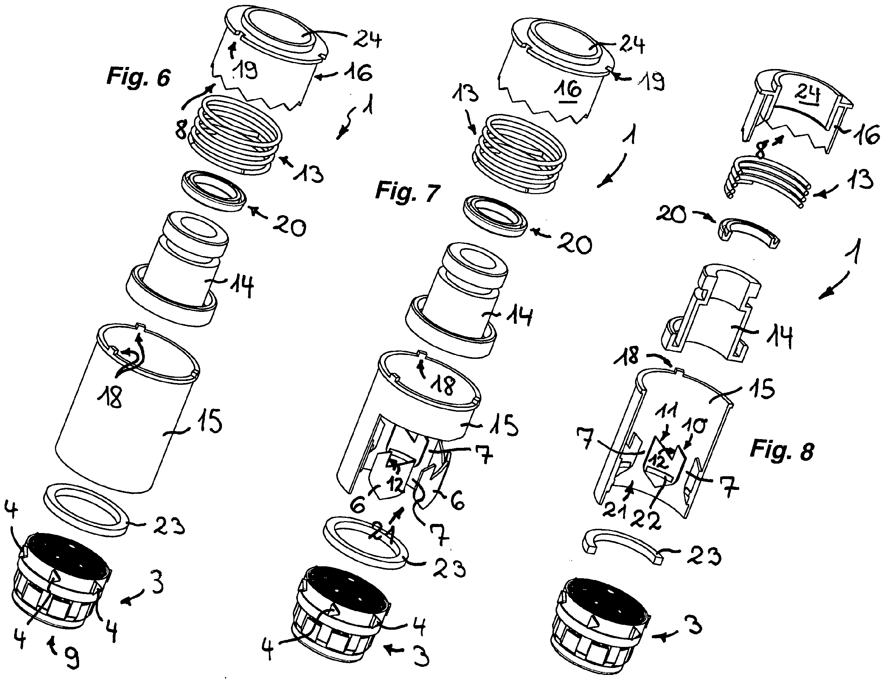

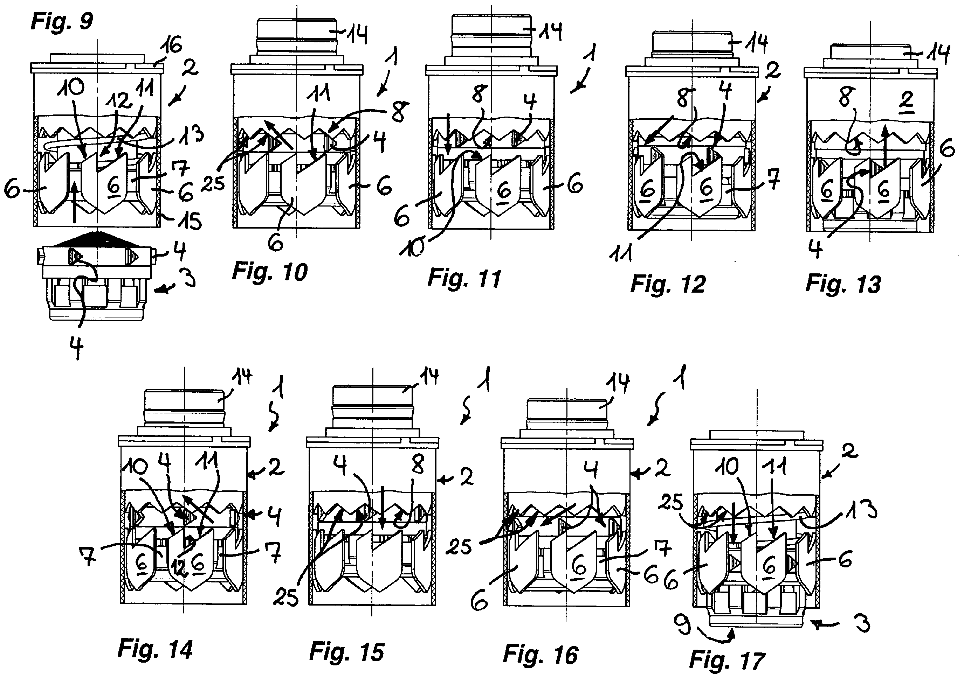

In den Figuren 1 bis 17 ist eine sanitäre Auslaufeinheit 1 dargestellt, die mit einem Außengehäuse 2 am rohrförmigen Wasserauslauf einer hier nicht weitergezeigten sanitären Auslaufarmatur montierbar ist. Der Auslaufeinheit 1 ist eine sanitäre Funktionseinheit 3 zugeordnet, die an ihrem Außenumfang Haltevorsprünge 4 hat. Diese Haltevorsprünge 4 liegen in der in den Figuren 3 und 13 gezeigten Gebrauchsstellung der Auslaufeinheit 1 in einer Ausnehmung 5 jeweils eines Gegenvorsprunges 6 auf, wobei diese Gegenvorsprünge 6 am Innenumfang des Außengehäuses 2 angeordnet sind. Die Gegenvorsprünge 6 werden durch Kanäle 7 voneinander getrennt, durch die hindurch die Haltevorsprünge 4 beim Einsetzen der Funktionseinheit 3 in das Außengehäuse 2 vorgeschoben werden können. Durch bloßes Einschieben der Funktionseinheit 3 lässt sich diese werkzeuglos in dem am Wasserauslauf der Auslaufarmatur montierten Außengehäuse 2 der Auslaufeinheit 1 befestigen.

Wie aus einem Vergleich der Figuren 13 bis 17 deutlich wird, können die Haltevorsprünge 4 aus ihren Ausnehmungen 5 heraus gegen eine im Inneren des Außengehäuses 2 befindliche Führungsprofilierung oder Führungskulisse 25 (vgl. Fig. 10, 15 bis 17) gedrückt werden, die hier als Sägezahnprofilierung 8 ausgebildet ist. In Figur 13 ist die entgegen der Einsetzrichtung wirkende und vorzugsweise durch manuelle Druckbeaufschlagung der Auslaufstirnseite 9 der Funktionseinheit 3 aufgebrachte Kraft durch einen Pfeil angedeutet. In Figur 14 ist gezeigt, wie die Funktionseinheit 3 mit ihren Haltevorsprüngen 4 beim axialen Verschieben im Inneren des Außengehäuses 2 gegen die Sägezahnprofilierung 8 stößt.

Die Sägezahnprofilierung 8 ist gegenüber den Ausnehmungen 5 derart versetzt angeordnet, dass beim weiteren Vorschieben der Funktionseinheit 3 die an den Flanken der Sägezahnprofilierung 8 anliegenden Haltevorsprünge 4 derart in die in Figur 14 gezeigte Pfeilrichtung zur Seite gedrückt werden, dass die axiale Vorschubbewegung in eine Drehbewegung der Funktionseinheit 3 in Umfangsrichtung umgesetzt wird. Durch diese Drehbewegung der Funktionseinheit 3 in Umfangsrichtung werden auch die an der Funktionseinheit 3 außenumfangsseitig vorgesehenen Haltevorsprünge 4 in eine, jeweils einem Kanal 7 angenäherte Drehposition bewegt, wie dies aus den Figuren 15 bis 17 deutlich wird.

In den Figuren 15 bis 17 ist besonders gut erkennbar, dass die Gegenvorsprünge 6 an ihrer sich in Drehrichtung an ihre Ausnehmung 5 anschließenden Stirnseite eine zum benachbarten Kanal 7 hin zulaufende Einlaufschräge 10 tragen. Die von der Sägezahnprofilierung 8 kommenden und dort schon in Drehrichtung verschobenen Haltevorsprünge 4 treffen bei dem in Figur 16 gezeigten Ausschieben der Funktionseinheit 3 aus dem Außengehäuse 2 auf der zugeordneten Einlaufschräge 10 auf, auf der sie nun in Richtung zum Kanal 7 hin verschoben und derart in Drehrichtung weitergeschoben werden, bis die Funktionseinheit 3 mit ihren Haltevorsprüngen 4 durch die Kanäle 7 hindurch aus dem Außengehäuse 2 herausgeschoben und vom Außengehäuse 2 separiert werden kann, wie dies in Figur 17 angedeutet ist. Durch bloße manuelle Druckbeaufschlagung der Funktionseinheit 3 auf deren Auslaufstirnseite 9 kann die Funktionseinheit 3 werkzeuglos und so mit geringem Aufwand aus dem am Wasserauslauf der Auslaufarmatur montierten Außengehäuse 2 entnommen werden, um diese Funktionseinheit 3 beispielsweise austauschen oder reinigen zu können.

Aus den Figuren 9 bis 13 wird deutlich, dass die Funktionseinheit 3 von der Auslaufstirnseite des Außengehäuses 2 aus in dessen Gehäuseinnenraum einschiebbar ist, bis die an der Funktionseinheit 3 außenumfangsseitig vorstehenden Haltevorsprünge 4 auf die Sägezahnprofilierung 8 treffen. Wie in den Figuren 10 und 11 erkennbar ist, werden die an den Flanken der Sägezahnprofilierung 8 anliegenden Haltevorsprünge 4 beim weiteren Vorschieben der Funktionseinheit 3 in das Außengehäuse 2 derart zur Seite gedrückt, dass diese axiale Vorschubbewegung der Funktionseinheit 3 in eine Drehbewegung dieser Funktionseinheit 3 umgesetzt wird, welche die Haltevorsprünge 4 in eine, der benachbarten Ausnehmung 5 angenäherte Drehposition bewegt. Die Gegenvorsprünge 6 haben an ihrer, sich entgegen der Drehrichtung an ihre Ausnehmung 5 anschließenden Stirnseite eine zur Ausnehmung 5 hin zulaufende Einrückschräge 11. Die nach dem Auftreffen auf der Sägezahnprofilierung 8 in die der Einsetzrichtung abgewandte Richtung zurückfallenden Haltevorsprünge 4 treffen in der in Figur 12 gezeigten Drehposition der Funktionseinheit 3 auf den Gegenvorsprüngen 6 auf. Diese Gegenvorsprünge 6 weisen an ihrer entgegen der Drehrichtung an ihre Ausnehmung 5 anschließenden Stirnseite eine zur Ausnehmung hin zulaufende Einrückschräge 11 auf, welche die Haltevorsprünge 4 jeweils in die benachbarte Ausnehmung 5 fallen lässt (vgl. Fig. 13) .

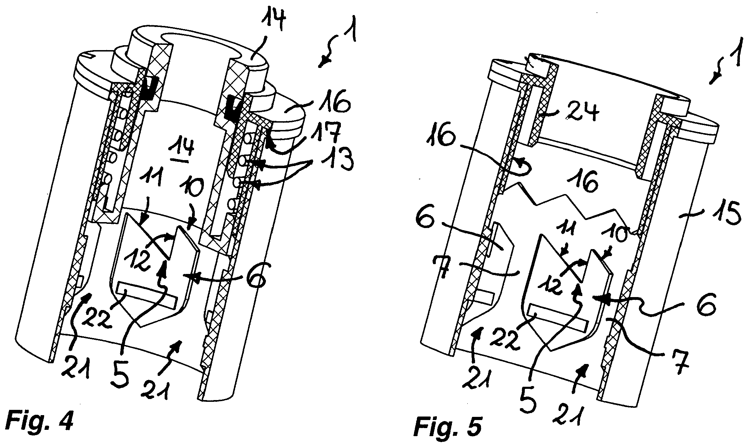

In den Figuren 4 und 5 ist erkennbar, dass die der Sägezahnprofilierung 8 zugewandten Stirnseiten der Gegenvorsprünge 6 jeweils durch eine Einlaufschräge 10 und eine Einrückschräge 11 gebildet sind. Dabei sind die Einrückschräge 11 und die Einlaufschräge 10 eines jeden Gegenvorsprunges 6 durch eine, in axialer Richtung orientierte Flanke 12 gebildet, welche die Ausnehmung 5 der Gegenvorsprünge 6 und die in die Ausnehmung 5 übergehenden Einrückschrägen 11 begrenzt.

Aus einem Vergleich der Figuren 1, 2 und 4 wird deutlich, dass die Funktionseinheit 3 im Außengehäuse 2 gegen die Ausschiebekraft eines Rückstell- oder Ausschiebeelementes 13 in die auf der Auslaufstirnseite des Außengehäuses 2 abgewandte Richtung verschiebbar ist. Dazu ist im Außengehäuse 2 eine Innenhülse 14 verschieblich geführt, die das Rückstell- oder Ausschiebeelement 13 beaufschlagt. Die in das Außengehäuse 2 eingesetzte Funktionseinheit 3 beaufschlagt dabei die dem Rückstell- oder Ausschiebeelement 13 abgewandte Stirnseite der Innenhülse 14. Um die Trennebene zwischen der Innenhülse 14 und der Funktionseinheit 3 gegenüber dem Inneren des Außengehäuses 2 abzudichten, ist zwischen der Innenhülse 14 und der Funktionseinheit 3 eine Ringdichtung 23 vorgesehen. Das Rückstell- oder Ausschiebeelement 13 kann elastisch und insbesondere federelastisch ausgebildet sein. Eine besonders einfache und praktikable Ausführungsform sieht vor, dass das Rückstell- oder Ausschiebelement 13 - wie hier - als Druckfeder ausgebildet ist. In den Figuren 1 und 3 ist erkennbar, dass die als Rückstell- oder Ausschiebeelement 13 dienende Druckfeder die Innenhülse 14 umgreift.

Das Außengehäuse 2 ist hier zweiteilig ausgebildet und weist eine Gehäusehülse 15 auf, die mit einem zuströmseitigen Deckelteil 16 des Außengehäuses 2 verbindbar ist. Dabei ist das Deckelteil 16 mit einem angeformten Hülsenabschnitt, der an seinem freien Stirnrand die Sägezahnprofilierung 8 trägt, in die Gehäusehülse 15 einschiebbar, bis ein am Deckelteil 16 radial vorstehender Ringabsatz 17 am gegenüberliegenden Stirnrand der Gehäusehülse 15 anschlägt. Die gewünschte Relativposition von Gehäusehülse 15 und Deckelteil 16 wird durch Positioniervorsprünge 18 gesichert, die am Deckelteil 16 oder an der Gehäusehülse 15 vorstehen und mit Positionierausnehmungen 19 am jeweils anderen Bauteil 15, 16 zusammenwirken. In einer Stirnplatte des Deckelteils 16 ist eine zentrale Führungshülse 24 vorgesehen, in der die Innenhülse 14 verschieblich geführt ist. Dabei wird der Ring- oder Führungsspalt zwischen dem Innenumfang der Führungshülse 24 und dem Außenumfang der Innenhülse 14 durch einen Dichtring 20 abgedichtet.

Um die Auslaufeinheit 1 im Wasserauslauf einer Auslaufarmatur vorzugsweise lösbar montieren zu können, ist das Außengehäuse 2 vorzugsweise als Schraubhülse ausgebildet, die mit einem außenumfangsseitig vorgesehenen und hier nicht weiter dargestellten Außengewinde in ein Innengewinde am Wasserauslauf der sanitären Auslaufarmatur einschraubbar ist. Dabei kann das durch die Auslaufarmatur strömende Wasser durch die Innenhülse 14 in das Innere des Außengehäuses 2 einströmen, um von dort durch die Funktionseinheit 3 hindurch an der Auslaufstirnseite 9 der Funktionseinheit 3 auszuströmen.

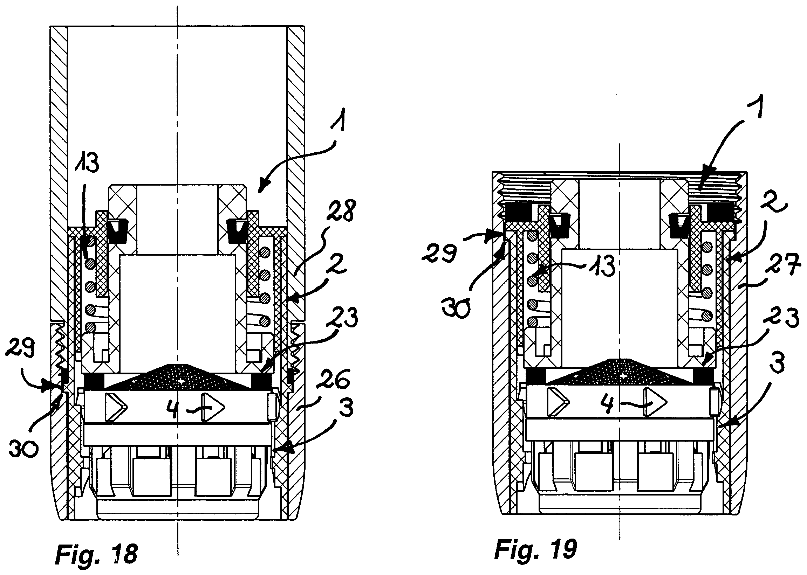

Möglich ist aber auch, die Auslaufeinheit 1 mit Hilfe eines Auslaufmundstücks 26, 27 am Wasserauslauf 28 einer sanitären Auslaufarmatur montieren zu können. In den Figuren 18 und 19 ist anhand von zwei Ausführungsbeispielen dargestellt, wie die Auslaufeinheit 1 mit Hilfe der Auslaufmundstücke 26 oder 27 am Wasserauslauf 28 einer ansonsten nicht weiter gezeigten Auslaufeinheit montiert werden kann. Während dazu in Figur 19 ein spezielles überlanges Auslaufmundstück 27 verwendet wird, das die Auslaufeinheit 1 vollständig in sich aufnehmen kann, steht die in Figur 18 gezeigte Auslaufeinheit 1 über den zuströmseitigen Stirnrand des hier an sich üblich ausgestalteten Auslaufmundstückes 26 vor und ragt mit dem Überstand seines Außengehäuses 2 in die Innenhöhlung des hülsenförmigen Wasserauslaufs 28 der sanitären Auslaufarmatur vor. Dabei schließen bei beiden Ausführungsbeispielen gemäß den Figuren 18 und 19 der auslaufseitige Stirnrand des Außengehäuses 2 in etwa einer Ebene mit dem auslaufseitigen Stirnrand der Auslaufmundstücke 26 beziehungsweise 27 ab.

Am Außenumfang der Außengehäuse 2 ist ein Ringabsatz und insbesondere ein Ringflansch 29 vorgesehen, der auf einem Ringabsatz 30 am Innenumfang der hülsenförmigen Auslaufmundstücke 26, 27 aufliegt. Die Auslaufmundstücke 26, 27 sind über eine Schraubverbindung am Wasserauslauf der sanitären Auslaufarmatur montiert. Wie in dem Ausführungsbeispiel gemäß Figur 18 dargestellt ist, ist das Außengehäuse 2 der Auslaufeinheit 1 dazu als Schraubhülse ausgebildet, die mit einem außenumfangsseitig vorgesehenen Außengewinde in ein Innengewinde am Wasserauslauf 28 der sanitären Auslaufarmatur einschraubbar ist.

Um das Einfädeln der Haltevorsprünge 4 beim Einschieben der Funktionseinheit 3 in das Außengehäuse 2 in die Kanäle 7 zu erleichtern, ist es vorteilhaft, wenn die Gegenvorsprünge 6 sich in Richtung zur Auslaufstirnseite der Auslaufeinheit 1 verjüngen und wenn benachbarte Gegenvorsprünge 6 einen, im dazwischenliegenden Kanal 7 mündenden Einlauftrichter 21 begrenzen. Die einzelnen Bestandteile der Auslaufeinheit 1 können aus jedem geeigneten Material hergestellt werden. Bei der hier dargestellten Auslaufeinheit 1 sind das Außengehäuse 2, die Innenhülse 14, die Gehäusehülse 15 und das Deckelteil 16 aus Kunststoff hergestellt und insbesondere als Kunststoffspritzgussteil ausgebildet. Aus einem Vergleich der Figuren 1 bis 5 und insbesondere aus Figur 2 ist erkennbar, dass an den Gegenvorsprüngen 6 Abstützkanten 22 vorstehen, die ein vollständiges Austreten der von der Rückstellkraft des Rückstell- oder Ausschiebeelementes 13 beaufschlagten Innenhülse 14 verhindern, wenn die sanitäre Funktionseinheit 3 aus dem Gehäuseinneren des Außengehäuses 2 entfernt wurde. Durch die Rückstellkraft des auf die Innenhülse 14 einwirkenden Rückstell- oder Ausschiebeelementes 13 wird die Funktionseinheit 3 aus dem Außengehäuse 2 ausgeschoben, ohne dass zusätzlich auch der Wasserdruck eines durch die Auslaufeinheit 1 durchfließenden Wasserstromes notwendig ist. Liegt die Innenhülse 14 in Gebrauchsstellung der Auslaufeinheit 1 an den Abstützkanten 22 an, wirkt auch auf die Funktionseinheit 3 keine weitere Rückstellkraft des Rückstell- oder Ausschiebeelementes 13 ein. Die beim Aus- und Einschieben der Funktionseinheit 3 aus dem oder in das Außengehäuse 2 wird dadurch begünstigt, dass die Haltevorsprünge 4 einen pfeilspitzen- oder dreieckförmigen Querschnitt haben, dessen Dreieck- oder Pfeilspitze in die der Drehrichtung entgegengesetzte Umfangsrichtung orientiert ist. Durch diese pfeilspitzen- oder dreieckförmige Formgebung der Haltevorsprünge 4 wird deren Zusammenwirken mit den Flanken begünstigt, die einerseits an der Sägezahnprofilierung 8 und andererseits an den Gegenvorsprüngen 6 vorgesehen sind.

### Bezugszeichenliste

- 1: Auslaufeinheit
- 2: Außengehäuse
- 3: Funktionseinheit
- 4: Haltevorsprünge
- 5: Ausnehmung
- 6: Gegenvorsprünge
- 7: Kanal
- 8: Sägezahnprofilierung
- 9: Auslaufstirnseite
- 10: Einlaufschräge
- 11: Einrückschräge
- 12: Flanke
- 13: Rückstell- oder Ausschiebeelement
- 14: Innenhülse
- 15: Gehäusehülse
- 16: Deckelteil
- 17: Ringabsatz
- 18: Positioniervorsprung
- 19: Positionierausnehmung
- 20: Dichtring
- 21: Einlauftrichter
- 22: Abstützkante
- 23: Ringdichtung
- 24: Führungshülse
- 25: Führungskulisse
- 26: Auslaufmundstück (gem. Fig. 18)
- 27: Auslaufmundstück (gem. Fig. 19)
- 28: Wasserauslauf
- 29: Ringflansch
- 30: Ringabsatz

## Patentansprüche

1. Sanitäre Auslaufeinheit (1) mit einem Außengehäuse (2), das am Wasserauslauf einer sanitären Auslaufarmatur montierbar ist, und mit einer sanitären Funktionseinheit (3), die an ihrem Außenumfang zumindest einen Haltevorsprung (4) hat, wobei die Funktionseinheit (3) von der Auslaufstirnseite des Außengehäuses (2) aus mit ihrem zumindest einen Haltevorsprung (4) in den Gehäuseinnenraum des Außengehäuses (2) einsetzbar ist und dort durch Druckbeaufschlagung von der Auslaufstirnseite aus in die der Auslaufstirnseite abgewandte Richtung verschiebbar ist, **dadurch gekennzeichnet, dass** die Funktionseinheit (3) mehrere Haltevorsprünge (4) hat, welche in einer Gebrauchsstellung der Auslaufeinheit (1) in einer Ausnehmung (5) jeweils eines Gegenvorsprunges (6) am Innenumfang des Außengehäuses (2) aufliegen, und dass die Funktionseinheit (3) von der Auslaufstirnseite des Außengehäuses (2) aus mit ihren Haltevorsprüngen (4) durch, die Gegenvorsprünge (6) trennende Kanäle (7) hindurch in den Gehäuseinnenraum des Außengehäuses (2) einsetzbar ist und dort durch Druckbeaufschlagung von der Aüslaufstirnseite aus derart in die der Auslaufstirnseite abgewandte Richtung verschiebbar ist, dass die Haltvorsprünge (4) aus ihren Ausnehmungen (5) heraus gegen eine Führungsprofilierung oder Führungskulisse (25) gedrückt werden, die die axiale Vorschubbewegung der Funktionseinheit (3) und ihre außenumfangsseitig vorstehenden Haltevorsprünge (4) in eine Drehbewegung der Funktionseinheit (3) in Umfangsrichtung umsetzt, welche die Haltevorsprünge: (4) in eine, im Wesentlichen zu jeweils einem Kanal (7) koaxiale Drehposition bewegt.

2. Sanitäre Auslaufeinheit nach Anspruch 1, **dadurch gekennzeichnet, dass** die Gegenvorsprünge (6) an ihrer, sich in Drehrichtung an ihre Ausnehmung (5) anschließenden Stirnseite eine zum benachbarten Kanal (7) hin zulaufende Einlaufschräge (10) tragen.

3. Sanitäre Auslaufeinheit nach Anspruch: 1 oder 2, **dadurch gekennzeichnet, dass** die Funktionseinheit (3) von der Auslaufstirnseite des Außengehäuses (2) aus in dessen Gehäuseinnenraum einschiebbar ist, bis die an der Funktionseinheit (3) außenumfangsseitig vorstehenden Haltevorsprünge (4) auf die Führungsprofilierung oder Führungskulisse (25) treffen, die (25) die axiale Vorschubbewegung der Funktionseinheit (3) in eine Drehbewegung umsetzt, welche die Haltevorsprünge (4) in eine, der benachbarten Ausnehmung (5) angenäherte Drehposition bewegt.

4. Sanitäre Auslaufeinheit nach einem der Ansprüche 1 bis 3, **dadurch gekennzeichnet, dass** die Gegenvorsprünge (6) jeweils eine taschenförmige und eine Ausnehmung (5) bildende Eintiefung: umgrenzen.

5. Sanitäre Auslaufeinheit nach Anspruch 4, **dadurch gekennzeichnet, dass** die eine Eintiefung umgrenzenden und in Vorschubrichtung orientierten Längswände der Gegenvorsprünge (6) etwa parallel zueinander angeordnet sind oder konisch aufeinander zu verlaufen.

6. Sanitäre Auslaufeinheit nach einem der Ansprüche 1 bis 5, **dadurch gekennzeichnet, dass** die Gegenvorsprünge (6): an ihrer, sich entgegen der Drehrichtung an ihre Ausnehmung (5) anschließenden Stirnseite eine zur Ausnehmung hin zulaufende und vorzugsweise in die Ausnehmung übergehende Einrückschräge (11) haben.

7. Sanitäre Auslaufeinheit nach einem der Ansprüche 1 bis 5, **dadurch:gekennzeichnet, dass** die der Führungsprofilierung oder Führungskulisse zugewandten Stirnseiten der Gegenvorsprünge (6) durch eine Einlaufschräge (10) und eine Einrückschräge (11) gebildet sind und dass die Einrückschräge (11) und die Einlaufschräge (10) eines jeden Gegenvorsprungs (6) durch eine, in axialer Richtung der Funktionseinheit (3) orientierte Flanke (12) gebildet sind, welche die Ausnehmung (5) der Gegenvorsprünge (6) begrenzt.

8. Sanitäre Auslaufeinheit nach einem der Ansprüche 1 bis 7, **dadurch gekennzeichnet, dass** die Funktionseinheit (3) im Außengehäuse (2) gegen eine Rückstell- oder Ausschiebekraft zumindest eines Rückstell- oder Ausschiebeelementes (13) in die der Auslaufstirnseite des Außengehäuses (2) abgewandte Richtung verschiebbar ist.

9. Sanitäre Auslaufeinheit nach Anspruch 8, **dadurch gekennzeichnet, dass** im Außengehäuse (2) eine Innenhülse (14) verschieblich geführt ist, dass das zumindest eine Rückstell- oder Ausschiebeelement (13) die Innenhülse (14) beaufschlagt und dass die Funktionseinheit (3) auf dem zumindest einen Rückstell- oder Ausschiebeelement (13) abgewandten Stirnseite der Innenhülse (14) an dieser anliegt.

10. Sanitäre Auslaufeinheit nach Anspruch 9, **dadurch gekennzeichnet, dass** zwischen der Innenhülse (14) und der Funktionseinheit (3) eine Ringdichtung (23) vorgesehen ist.

11. Sanitäre Auslaufeinheit nach einem der Ansprüche 1 bis 10, **dadurch gekennzeichnet, dass** das Außengehäuse (2) mittels einer Schraub- oder einer Bajonettverbindung am Wasserauslauf (28) einer sanitären Auslaufarmatur gehalten ist.

12. Sanitäre Auslaufeinheit nach einem der Ansprüche 1 bis 11, **dadurch gekennzeichnet, dass** das Außengehäuse (2) als Schraubhülse ausgebildet ist, die mit einem außenumfangsseitig vorgesehenen Außengewinde in ein Innengewinde am Wasserauslauf der sanitären Auslaufarmatur einschraubbar ist.

13. Sanitäre Auslaufeinheit nach einem der Ansprüche 1 bis 12, **dadurch gekennzeichnet, dass** das Rückstell- oder Ausschiebeelement (13) als Druckfeder ausgebildet ist.

14. Sanitäre Auslaufeinheit nach Anspruch 13, **dadurch gekennzeichnet, dass** die Druckfeder die Innenhülse (14) umgreift.

15. Sanitäre Auslaufeinheit nach einem der Ansprüche 1 bis 14, **dadurch gekennzeichnet, dass** die Gegenvorsprünge (6) sich in Richtung der Auslaufstirnseite der Auslaufeinheit (1) verjüngen und dass benachbarte Gegenvorsprünge (6) einen, im dazwischenliegenden Kanal (7) mündenden Einlauftrichter (21) begrenzen.

16. Sanitäre Auslaufeinheit nach einem der Ansprüche 1 bis 15, **dadurch gekennzeichnet, dass** die Funktionseinheit (3) zumindest eines der nachfolgenden Bestandteile: Strahlregler, Durchflussmengenregler oder Vorsatzsieb, aufweist.

17. Sanitäre Auslaufeinheit nach einem der Ansprüche 1 bis 16, **dadurch gekennzeichnet, dass** die Haltevorsprünge (4) einen pfeilspitzen- oder dreieckförmigen Querschnitt aufweisen, dass die Drehbewegung der Funktionseinheit (3) eine Drehrichtung hat, und dass die Dreieck- oder Pfeilspitze der Haltevorsprünge (4) in die der Drehrichtung der Funktionseinheit (3) entgegengesetzte Richtung orientiert sind.

18. Sanitäre Auslaufeinheit nach einem der Ansprüche 1 bis 17, **dadurch gekennzeichnet, dass** die Führungsprofilierung oder Führungskulisse (25) als Sägezahnprofilierung (8) ausgebildet ist.

## Claims

1. Sanitary outlet unit (1) having an outer housing (2) which can be mounted on the water outlet of a sanitary outlet fitting, and having a sanitary functional unit (3) which, on its outer periphery, has at least one holding protrusion (4), wherein the functional unit (3) can be inserted with its at least one holding protrusion (4) into the housing interior of the outer housing (2) from the outlet end face of the outer housing (2) and, at that location, can be displaced by application of pressure from the outlet end face in the direction away from the outlet end face, **characterised in that** the functional unit (3) has a plurality of holding protrusions (4) which, in a usage position of the outlet unit (1), lie in a recess (5) of a respective counter protrusion (6) on the inner periphery of the outer housing (2), and **in that** the functional unit (3) can be inserted, from the outlet end face of the outer housing (2), with its holding protrusions (4) through channels (7), which separate the counter protrusions (6), into the housing interior of the outer housing (2) and, at that location, can be displaced by application of pressure from the outlet end face in the direction away from the outlet end face in such a way that the holding protrusions (4) are pushed out of their recesses (5) against a guide profile or guide slot (25) which converts the axial advancing movement of the functional unit (3) and its holding protrusions (4), protruding on the outer peripheral side, into a rotational movement of the functional unit (3) in the peripheral direction, which moves the holding protrusions (4) into a rotational position substantially coaxial to a respective channel (7).

2. Sanitary outlet unit as claimed in claim 1, **characterised in that**, on their end face adjoining their recess (5) in the rotational direction, the counter protrusions (6) have a run-up slope (10) tapering towards the neighbouring channel (7).

3. Sanitary outlet unit as claimed in claim 1 or 2, **characterised in that**, from the outlet end face of the outer housing (2), the functional unit (3) can be pushed into the housing interior of the outer housing until the holding protrusions (4) protruding on the functional unit (3) on the outer peripheral side contact the guide profile or guide slot (25) which profile or slot (25) converts the axial advancing movement of the functional unit (3) into a rotational movement which moves the holding protrusions (4) into a rotational position closer to the neighbouring recess (5).

4. Sanitary outlet unit as claimed in any one of claims 1 to 3, **characterised in that** the counter protrusions (6) each define a pocket-like depression forming a recess (5).

5. Sanitary outlet unit as claimed in claim 4, **characterised in that** the longitudinal walls of the counter protrusions (6), which define a depression and are orientated in the advancing direction, are disposed approximately parallel to one another or extend in a conical manner towards one another.

6. Sanitary outlet unit as claimed in any one of claims 1 to 5, **characterised in that**, on their end face adjoining their recess (5) counter to the rotational direction, the counter protrusions (6) have an engaging slope (11) tapering towards the recess and preferably merging into the recess.

7. Sanitary outlet unit as claimed in any one of claims 1 to 5, **characterised in that** the end faces of the counter protrusions (6) facing the guide profile or guide slot are formed by a run-up slope (10) and an engaging slope (11) and that the engaging slope (11) and the run-up slope (10) of each counter protrusion (6) are formed by a flank (12) orientated in the axial direction of the functional unit (3), which flank delimits the recess (5) of the counter protrusions (6).

8. Sanitary outlet unit as claimed in any one of claims 1 to 7, **characterised in that** the functional unit (3) in the outer housing (2) can be displaced against a restoring or ejection force of at least one restoring or ejection element (13) in the direction away from the outlet end face of the outer housing (2).

9. Sanitary outlet unit as claimed in claim 8, **characterised in that**, in the outer housing (2), an inner sleeve (14) is displaceably guided, **in that** the at least one restoring or ejection element (13) acts upon the inner sleeve (14) and **in that**, on the end face of the inner sleeve (14) facing away from the at least one restoring or ejection element (13), the functional unit (3) lies against said inner sleeve.

10. Sanitary outlet unit as claimed in claim 9, **characterised in that** a ring seal (23) is provided between the inner sleeve (14) and the functional unit (3).

11. Sanitary outlet unit as claimed in any one of claims 1 to 10, **characterised in that** the outer housing (2) is held on the water outlet (28) of a sanitary outlet fitting by means of a screw connection or a bayonet connection.

12. Sanitary outlet unit as claimed in any one of claims 1 to 11, **characterised in that** the outer housing (2) is designed as a threaded sleeve which can be screwed to an outer thread provided on the outer peripheral side into an internal thread on the water outlet of the sanitary outlet fitting.

13. Sanitary outlet unit as claimed in any one of claims 1 to 12, **characterised in that** the restoring or ejection element (13) is designed as a compression spring.

14. Sanitary outlet unit as claimed in claim 13, **characterised in that** the compression spring engages around the inner sleeve (14).

15. Sanitary outlet unit as claimed in any one of claims 1 to 14, **characterised in that** the counter protrusions (6) taper in the direction of the outlet end face of the outlet unit (1) and **in that** neighbouring counter protrusions (6) delimit an inlet funnel (21) issuing in the channel (7) located therebetween.

16. Sanitary outlet unit as claimed in any one of claims 1 to 15, **characterised in that** the functional unit (3) has at least one of the following components: jet regulator, throughflow quantity regulator or attachment screen.

17. Sanitary outlet unit as claimed in any one of claims 1 to 16, **characterised in that** the holding protrusions (4) comprise an arrow head-shaped or triangular cross-section, **in that** the rotational movement of the functional unit (3) has a rotational direction, and **in that** the triangular or arrow head of the holding protrusions (4) are orientated in the direction opposite to the rotational direction of the functional unit (3).

18. Sanitary outlet unit as claimed in any one of claims 1 to 17, **characterised in that** the guide profile or guide slot (25) is formed as a saw-tooth profile (8).

## Revendications

1. Unité d'écoulement sanitaire (1) avec un boîtier extérieur (2), qui peut être monté sur la sortie d'eau d'une robinetterie d'écoulement sanitaire, et avec une unité fonctionnelle sanitaire (3), qui porte à sa périphérie extérieure au moins une saillie de retenue (4), dans laquelle l'unité fonctionnelle (3) peut être introduite à partir du côté frontal de sortie du boîtier extérieur (2) avec son au moins une saillie de retenue (4) dans l'espace intérieur de boîtier du boîtier extérieur (2) et peut y être déplacée par une application de pression à partir du côté frontal de sortie dans la direction opposée au côté frontal de sortie, **caractérisée en ce que** l'unité fonctionnelle (3) porte plusieurs saillies de retenue (4), qui, dans une position d'utilisation de l'unité d'écoulement (1), s'appliquent dans un évidement (5) respectivement d'une contre-saillie (6) sur la périphérie intérieure du boîtier extérieur (2), et **en ce que** l'unité fonctionnelle (3) peut être introduite à partir du côté frontal de sortie du boîtier extérieur (2) avec ses saillies de retenue (4) à travers des canaux (7) séparant les contre-saillies (6) dans l'espace intérieur de boîtier du boîtier extérieur (2) et peut y être déplacée par une application de pression à partir du côté frontal de sortie dans la direction opposée au côté frontal de sortie, de telle manière que les saillies de retenue (4) soient poussées hors de leurs évidements (5) contre un profilage de guidage ou une coulisse de guidage (25), qui convertit le mouvement d'avance axial de l'unité fonctionnelle (3) et ses saillies de retenue (4) saillantes du côté de la périphérie extérieure en un mouvement de rotation de l'unité fonctionnelle (3) en direction périphérique, qui déplace les saillies de retenue (4) dans une position de rotation essentiellement coaxiale respectivement à un canal (7).

2. Unité d'écoulement sanitaire selon la revendication 1, **caractérisée en ce que** les contre-saillies (6) portent sur leur côté frontal se raccordant dans le sens de rotation à leur évidement (5) une rampe d'entrée (10) dirigée vers le canal voisin (7).

3. Unité d'écoulement sanitaire selon la revendication 1 ou 2, **caractérisée en ce que** l'unité fonctionnelle (3) peut être introduite à partir du côté frontal de sortie du boîtier extérieur (2) dans l'espace intérieur de boîtier de celui-là, jusqu'à ce que les saillies de retenue (4) saillantes du côté de la périphérie extérieure sur l'unité fonctionnelle (3) arrivent contre le profilage de guidage ou la coulisse de guidage (25), qui (25) convertit le mouvement d'avance axial de l'unité fonctionnelle (3) en un mouvement de rotation, qui déplace les saillies de retenue (4) dans une position de rotation proche de l'évidement voisin (5).

4. Unité d'écoulement sanitaire selon l'une quelconque des revendications 1 à 3, **caractérisée en ce que** les contre-saillies (6) délimitent respectivement un creux en forme de poche et formant un évidement (5).

5. Unité d'écoulement sanitaire selon la revendication 4, **caractérisée en ce que** les parois longitudinales des contre-saillies (6) délimitant un creux et orientées dans la direction d'avance sont sensiblement parallèles l'une à l'autre ou s'étendent en cône l'une vers l'autre.

6. Unité d'écoulement sanitaire selon l'une quelconque des revendications 1 à 5, **caractérisée en ce que** les contre-saillies (6) comportent, sur leur côté frontal se raccordant à leur évidement (5) à l'opposé du sens de rotation, une rampe rentrante (11) dirigée vers l'évidement et, de préférence, se transformant en l'évidement.

7. Unité d'écoulement sanitaire selon l'une quelconque des revendications 1 à 5, **caractérisée en ce que** les côtés frontaux des contre-saillies (6) tournés vers le profilage de guidage ou la coulisse de guidage sont formés par une rampe d'entrée (10) et une rampe rentrante (11) et **en ce que** la rampe rentrante (11) et la rampe d'entrée (10) de chaque contre-saillie (6) sont formées par un flanc (12) orienté dans la direction axiale de l'unité fonctionnelle (3) qui limite l'évidement (5) des contre-saillies (6).

8. Unité d'écoulement sanitaire selon l'une quelconque des revendications 1 à 7, **caractérisée en ce que** l'unité fonctionnelle (3) peut être déplacée dans le boîtier extérieur (2) contre une force de rappel ou d'expulsion d'au moins un élément de rappel ou d'expulsion (13) dans la direction opposée au côté frontal de sortie du boîtier extérieur (2).

9. Unité d'écoulement sanitaire selon la revendication 8, **caractérisée en ce qu'**une douille intérieure (14) est guidée de façon déplaçable dans le boîtier extérieur (2), **en ce que** ledit au moins un élément de rappel ou d'expulsion (13) agit sur la douille intérieure (14) et **en ce que** l'unité fonctionnelle (3) s'applique sur la douille intérieure (14) sur le côté frontal de celle-là éloigné dudit au moins un élément de rappel ou d'expulsion (13).

10. Unité d'écoulement sanitaire selon la revendication 9, **caractérisée en ce qu'**il est prévu un joint annulaire (23) entre la douille intérieure (14) et l'unité fonctionnelle (3).

11. Unité d'écoulement sanitaire selon l'une quelconque des revendications 1 à 10, **caractérisée en ce que** le boîtier extérieur (2) est maintenu au moyen d'un assemblage vissé ou à baïonnette sur la sortie d'eau (28) d'une robinetterie d'écoulement sanitaire.

12. Unité d'écoulement sanitaire selon l'une quelconque des revendications 1 à 11, **caractérisée en ce que** le boîtier extérieur (2) est formé par une douille à visser, qui peut être vissée avec un filet extérieur prévu en périphérie extérieure dans un filet intérieur sur la sortie d'eau de la robinetterie d'écoulement sanitaire.

13. Unité d'écoulement sanitaire selon l'une quelconque des revendications 1 à 12, **caractérisée en ce que** l'élément de rappel ou d'expulsion (13) est formé par un ressort de pression.

14. Unité d'écoulement sanitaire selon la revendication 13, **caractérisée en ce que** le ressort de pression entoure la douille intérieure (14).

15. Unité d'écoulement sanitaire selon l'une quelconque des revendications 1 à 14, **caractérisée en ce que** les contre-saillies (6) se rétrécissent en direction du côté frontal de sortie de l'unité d'écoulement (1) et **en ce que** des contre-saillies voisines (6) limitent un entonnoir d'entrée (21) débouchant dans le canal (7) situé entre elles.

16. Unité d'écoulement sanitaire selon l'une quelconque des revendications 1 à 15, **caractérisée en ce que** l'unité fonctionnelle (3) présente au moins un des composants suivants : régulateur de jet, régulateur de débit ou filtre d'entrée.

17. Unité d'écoulement sanitaire selon l'une quelconque des revendications 1 à 16, **caractérisée en ce que** les saillies de retenue (4) présentent une section transversale en forme de pointe de flèche ou de triangle, **en ce que** le mouvement rotatif de l'unité fonctionnelle (3) a un sens de rotation et **en ce que** le triangle ou la pointe de flèche des saillies de retenue (4) est orienté(e) dans la direction opposée au sens de rotation de l'unité fonctionnelle (3).

18. Unité d'écoulement sanitaire selon l'une quelconque des revendications 1 à 17, **caractérisée en ce que** le profilage de guidage ou la coulisse de guidage (25) est un profilage en dents de scie (8).
